# EUROPEAN PATENT SPECIFICATION

(11) **EP 3 720 045 B1**
(45) Date of publication and mention of the grant of the patent: **08.05.2024**
(21) Application number: 19825968.1
(22) Date of filing: 28.03.2019
(51) Int. Cl.: H04L 9/32, H04L 9/40, H04L 9/00, G06Q 20/02, G06Q 20/40, G06Q 30/018, G06Q 40/04

(54) **BLOCKCHAIN-BASED DATA VERIFICATION METHOD AND APPARATUS**
VERFAHREN UND VORRICHTUNG ZUR VERARBEITUNG VON BLOCKCHAIN-BASIERTEN DATEN
PROCÉDÉ ET APPAREIL DE VÉRIFICATION DE DONNÉES BASÉES SUR UNE CHAÎNE DE BLOCS

(30) Priority: 29.06.2018 CN 201810713248
(43) Date of publication of application: 07.10.2020
(73) Proprietor: Advanced New Technologies Co., Ltd., George Town, Grand Cayman KY1-9008 (KY)
(72) Inventor: YE, Guojun, Hangzhou, Zhejiang 311121 (CN)
(74) Representative: Goddar, Heinz J.
(86) International application number: PCT/CN2019/080021
(87) International publication number: WO 2020/001105

(56) References cited:
- CN-A- 107 819 777
- CN-A- 107 862 216
- CN-A- 109 067 541
- CN-U- 207 504 911
- US-A1- 2016 098 730
- US-A1- 2016 371 509
- ISLAM MD NAZMUL ET AL: "On IC traceability via blockchain", 2018 INTERNATIONAL SYMPOSIUM ON VLSI DESIGN, AUTOMATION AND TEST (VLSI-DAT), IEEE, 16 April 2018 (2018-04-16), pages 1-4, XP033354479, DOI: 10.1109/VLSI-DAT.2018.8373269

## Description

### TECHNICAL FIELD

One or more implementations of the present specification relate to the blockchain field, and in particular, to data verification methods and apparatuses, and electronic devices.

### BACKGROUND

A blockchain technology, also referred to as a distributed ledger technology, is a new technology in which a plurality of computing devices participate in "accounting" to maintain a complete distributed database. The blockchain technology has been widely used in many fields because of its features such as decentralization, openness and transparency, and participation of each computing device in recording data in a database, and fast data synchronization among computing devices.

US 2016/098730 A1 discloses an approach for blockchain verification of goods to prevent counterfeiting via inventory tracking. After obtaining an address, a computing device exports the address to a code affixed to a product and then files a crypto-currency transaction to the address at a transaction register, where the code includes information identifying the transaction register. Another computing device receives the first address which is scanned from the code affixed to the product, verifies the crypto-currency transaction at the transaction register by using the address, and determines whether the product is authentic based on the verification result.

CN 107819777 A discloses an approach for a data-storage based on blockchain technology. After obtaining a file data input by a user, a client generates a hash value corresponding to the file data, and obtains the user's identity information and basic attribute data of the file data. After generating a certificate data package by packing them, the client adds a digital signature to the package, generates a corresponding data ID to mark the package, and then sends the package to a blockchain. A server in the blockchain verifies the package and generates a corresponding deposit certificate containing block information and authentication information, and send it to the blockchain network to store the attestation data including the attestation certificate.

### SUMMARY

The invention is defined by a method, an apparatus, and a device according to the independent claims. Preferred embodiments are defined in the dependent claims.

The present specification provides a blockchain-based data verification method, including: obtaining a data identifier of target data published by a data provider in a blockchain, where the data identifier indicates a storage location of the target data in the blockchain; determining whether the target data has been stored in the blockchain based on the data identifier; if the target data has been stored in the blockchain, obtaining the target data from the storage location indicated by the data identifier, where the target data stored in the blockchain carries verification information used to verify authenticity of the target data; and verifying authenticity of the obtained target data based on the verification information, and outputting a verification result to a data verifier.

Optionally, the target data published by the data provider carries a graphic code generated based on the data identifier; and obtaining a data identifier of target data published by a data provider in a blockchain includes: scanning and parsing the graphic code to obtain the data identifier of the target data in the blockchain.

Optionally, the data identifier is a transaction hash value of a transaction of the target data; and determining whether the target data has been stored in the blockchain based on the data identifier includes: performing Simplified Payment Verification (SPV) for the transaction based on a transaction hash value of the transaction of the target data, to determine whether the transaction has been stored in the blockchain.

Optionally, verifying authenticity of the obtained target data based on the verification information includes: executing an installed verification program to verify authenticity of the obtained target data based on the verification information; or invoking a smart contract published in the blockchain, executing a verification program defined in the smart contract, and verifying authenticity of the obtained target data based on the verification information.

Optionally, the target data stored in the blockchain further includes auxiliary information related to the authenticity verification; and the verification information is a hash value obtained by performing a hash calculation based on original content of the target data and the auxiliary information; and verifying authenticity of the obtained target data based on the verification information includes: performing a hash calculation on the original content of the target data and the auxiliary information to obtain a hash value; determining whether the calculated hash value is the same as a hash value carried in the target data stored in the blockchain; and if yes, determining that the obtained target data passed the authenticity verification, or if not, determining that the obtained target data has failed to pass the authenticity verification.

Optionally, the auxiliary information includes any one of or a combination of at least two of the following: an identifier of a data uploader; an upload timestamp of the target data; or an upload location of the target data.

Optionally, the method includes the following steps: outputting the target data obtained from the storage location indicated by the data identifier to the data verifier, so that the data verifier compares the outputted target data with the target data published by the data provider.

The present specification further provides a blockchain-based data verification apparatus, including: a first acquisition module, configured to obtain a data identifier of target data published by a data provider in a blockchain, where the data identifier indicates a storage location of the target data in the blockchain; a determining module, configured to determine whether the target data has been stored in the blockchain based on the data identifier; a second acquisition module, configured to: if the target data has been stored in the blockchain, obtain the target data from the storage location indicated by the data identifier, where the target data stored in the blockchain carries verification information used to verify authenticity of the target data; and a verification module, configured to: verify authenticity of the obtained target data based on the verification information, and output a verification result to a data verifier.

Optionally, the target data published by the data provider carries a graphic code generated based on the data identifier; and the first acquisition module is configured to: scan and parse the graphic code to obtain the data identifier of the target data in the blockchain.

Optionally, the data identifier is a transaction hash value of a transaction of the target data; and the determining module is configured to: perform SPV for the transaction based on a transaction hash value of the transaction of the target data, to determine whether the transaction has been stored in the blockchain.

Optionally, the verification module is configured to: execute an installed verification program to verify authenticity of the obtained target data based on the verification information; or invoke a smart contract published in the blockchain, execute a verification program defined in the smart contract, and verify authenticity of the obtained target data based on the verification information.

Optionally, the target data stored in the blockchain further includes auxiliary information related to the authenticity verification; and the verification information is a hash value obtained by performing a hash calculation based on original content of the target data and the auxiliary information; and the verification module is further configured to: perform a hash calculation on the original content of the target data and the auxiliary information to obtain a hash value; determine whether the calculated hash value is the same as a hash value carried in the target data stored in the blockchain; and if yes, determine that the obtained target data passed the authenticity verification, or if not, determine that the obtained target data has failed to pass the authenticity verification.

Optionally, the auxiliary information includes any one of or a combination of at least two of the following: an identifier of a data uploader; an upload timestamp of the target data; or an upload location of the target data.

Optionally, the second acquisition module is further configured to: output the target data obtained from the storage location indicated by the data identifier to the data verifier, so that the data verifier compares the outputted target data with the target data published by the data provider.

The present specification further provides an electronic device, including: a processor; and a memory, configured to store machine executable instructions; where by reading and executing the machine executable instructions that are stored in the memory and that correspond to a control logic for blockchain-based data verification, the processor is enabled to: obtain a data identifier of target data published by a data provider in a blockchain, where the data identifier indicates a storage location of the target data in the blockchain; determine whether the target data has been stored in the blockchain based on the data identifier; if the target data has been stored in the blockchain, obtain the target data from the storage location indicated by the data identifier, where the target data stored in the blockchain carries verification information used to verify authenticity of the target data; and verify authenticity of the obtained target data based on the verification information, and output a verification result to a data verifier.

According to the previously described technical solution, on one hand, it is determined, based on the data identifier published by the data provider, whether the target data has been stored in the blockchain, and authenticity of the information published by the data provider can be verified, so that the data verifier can quickly identify a false data identifier that is published by the data provider and that does not correspond to any data storage record in the blockchain.

On the other hand, after it is determined that the target data has been stored in the blockchain, authenticity verification is performed on the target data in the blockchain based on the verification information carried in the target data stored in the blockchain, so that the data verifier can determine whether the content of the target data in the blockchain has been tampered with, and quickly identify abnormal data.

### BRIEF DESCRIPTION OF DRAWINGS

FIG. 1 is a schematic diagram illustrating a blockchain-based data verification method, according to an example implementation;
FIG. 2 is a diagram illustrating a consortium blockchain, according to an example implementation;
FIG. 3 is a schematic structural diagram illustrating an electronic device, according to an example implementation; and
FIG. 4 is block diagram illustrating a blockchain-based data verification apparatus, according to an example implementation.

### DESCRIPTION OF IMPLEMENTATIONS

As the level of social digitalization increases, how to connect the real world and the digital world has become a key concern when the Internet goes deeper into more fields of life and industries.

For example, in a typical scenario, some products are sold on an e-commerce website, and because the users can only see some pictures (digital information) on the website, it is necessary to convince consumers that the digital information corresponds to a product in the real world in actual applications.

In view of this, the present specification provides a technical solution to verify authenticity of the digital information stored in the distributed database of the blockchain.

During implementation, a standard data storage format can be defined for the target data, and the target data is uploaded by the uploading client to the blockchain node device accessible by the uploading client according to the defined data storage format. The defined data storage format can include verification information used to verify authenticity of the target data.

After receiving the target data uploaded by the uploading client, the node device can publish the target data in the blockchain, and store the target data in the distributed database of the blockchain after the consensus processing among the node devices in the blockchain.

After the target data is successfully stored in the distributed database of the blockchain, the node device in the blockchain can return a data identifier indicating the storage location of the target data in the blockchain to the data provider through the uploading client. For example, in actual applications, the data identifier can specifically be a transaction hash value of a transaction of the target data.

Further, after the target data is successfully stored in the distributed database of the blockchain, the data provider can publish the target data and the data identifier of the target data in the blockchain returned by the node device in the blockchain, for example, through a website.

After viewing the target data published by the data provider and the data identifier of the target data in the blockchain, the data verifier can verify, through the verification client, authenticity of the target data published by the data provider.

First, the verification client can obtain the data identifier published by the data provider, and verify, based on the data identifier, whether the target data has been stored in the distributed database of the blockchain.

Further, if it is verified that the target data has been stored in the distributed database of the blockchain, the target data stored in the blockchain can be obtained from the storage location indicated by the data identifier, and then authenticity verification is performed on the target data based on the verification information carried in the target data, and a verification result is output to the data verifier by the verification client.

According to the previously described technical solution, on one hand, it is determined, based on the data identifier published by the data provider, whether the target data has been stored in the blockchain, and authenticity of the information published by the data provider can be verified, so that the data verifier can quickly identify a false data identifier that is published by the data provider and that does not correspond to any data storage record in the blockchain.

On the other hand, after it is determined that the target data has been stored in the blockchain, authenticity verification is performed on the target data in the blockchain based on the verification information carried in the target data stored in the blockchain, so that the data verifier can determine whether the content of the target data in the blockchain has been tampered with, and quickly identify abnormal data.

The following describes the present specification by using the implementations and with reference to the specific application scenarios.

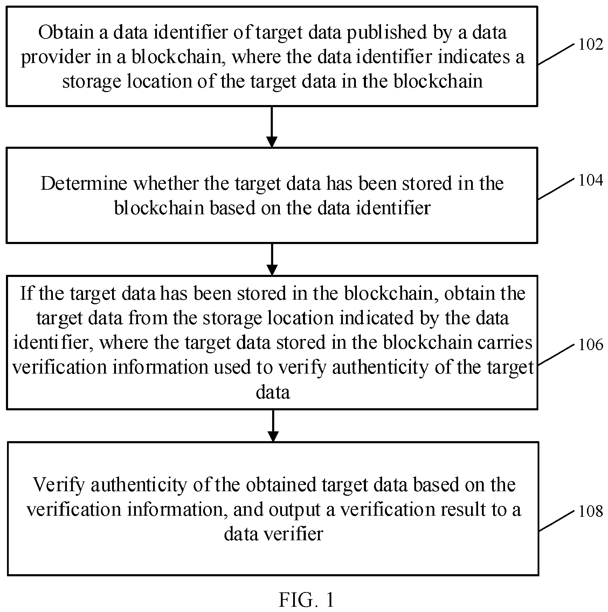

Referring to FIG. 1, FIG. 1 illustrates a blockchain-based data verification method, according to an implementation of the present specification. The method is applied to a verification client in a blockchain and includes the following steps:

Step 102: Obtain a data identifier of target data published by a data provider in a blockchain, where the data identifier indicates a storage location of the target data in the blockchain.

Step 104: Determine whether the target data has been stored in the blockchain based on the data identifier.

Step 106: If the target data has been stored in the blockchain, obtain the target data from the storage location indicated by the data identifier, where the target data stored in the blockchain carries verification information used to verify authenticity of the target data.

Step 108: Verify authenticity of the obtained target data based on the verification information, and output a verification result to a data verifier.

The target data can specifically include any form of digital information that can be stored in a blockchain, that can be released through the Internet, and that corresponds to an object in the real world.

For example, in one scenario, the target data can specifically be a product quality inspection report issued by a brick-and-mortar quality inspection organization, and the merchant can release a picture of the product together with a picture of the product quality inspection report of the product when issuing the product through an electronic commerce platform.

The data identifier can specifically include any form of identification information indicating a storage location of the data stored in the blockchain.

For example, in an illustrated implementation, in a distributed database of a blockchain, data is typically recorded in a transaction, stored in a block in the blockchain, and the transaction stored in the block is typically organized into a Merkle tree based on the transaction hash value of the transaction. Therefore, to facilitate data retrieval, the data identifier can specifically be a transaction hash value of a transaction of data. The transaction of the data can be quickly located based on a transaction hash value. Of course, in actual applications, the data identifier can specifically be a transaction index of a transaction of the data.

The blockchain described in the present specification can specifically include any type of blockchain network.

For example, in an illustrated implementation, the blockchain can specifically be a consortium blockchain including a plurality of merchants, a plurality of quality inspection organizations, and a plurality of consumers. As a data uploader, the quality inspection organization can access any node device in the consortium blockchain through the uploading client, and upload the product quality inspection report to the node device in the form of digital information. The node device initiates consensus processing for the product quality inspection report in the blockchain, and stores the product quality inspection report in the distributed database of the blockchain after the consensus is passed. As a data provider, a merchant can release, through an electronic commerce platform, a product quality inspection report issued by a quality inspection organization. When viewing the product quality inspection report released by the merchant, the consumer can also initiate authenticity verification for the product quality inspection report by accessing any node device in the consortium blockchain through the verification client.

The following describes the technical solution of the present specification in detail based on an example in which the target data is a product quality inspection report, the blockchain is the previously described consortium blockchain including a plurality of merchants, a plurality of quality inspection organizations, and a plurality of consumers.

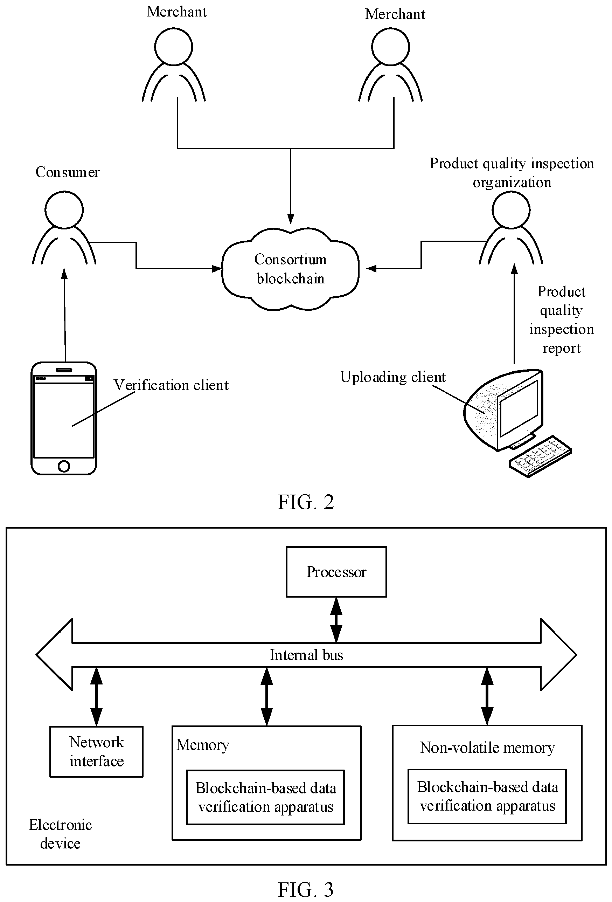

Referring to FIG. 2, FIG. 2 is a diagram illustrating a consortium blockchain, according to the present specification.

As shown in FIG. 2, a blockchain operator can pre-establish a consortium blockchain including a plurality of node devices. Merchants, product quality inspection organizations, and consumers can register in the consortium blockchain, and access the consortium blockchain as members of the consortium blockchain after obtaining legal identities in the consortium blockchain (for example, obtaining private key/public key pairs assigned by the consortium blockchain).

A specific process in which a merchant, a product quality inspection organization, and a consumer are registered in a consortium blockchain and join the consortium blockchain as members of the consortium blockchain is omitted in the present specification for simplicity.

Referring to FIG. 2, as a data uploader, the product quality inspection organization can access a node device in a consortium blockchain through an uploading client, and upload a product quality inspection report issued for a product entrusted by a merchant to the node device in the form of digital information.

As a data verifier, a consumer can access a node device in a consortium blockchain through a verification client. When viewing a product quality inspection report released by a merchant, the consumer can initiate authenticity verification for the product quality inspection report through the verification client.

It is worthwhile to note that the uploading client and the verification client each can be a web client (such as a blockchain browser) or a pre-installed application (APP), which is not specifically limited in the present specification.

In the present specification, the product quality inspection organization can define a standard data storage format for a product quality inspection report to be uploaded. After the product quality inspection organization issues a product quality inspection report for the product entrusted by the merchant, the product quality inspection report can be organized into a standard data storage format, signed based on the private key held by the product quality inspection organization, and then uploaded to the blockchain node device accessible by the uploading client.

The data storage format defined for the product quality inspection report can include three parts: original content of the data, verification information, and auxiliary information. The verification information is specifically used to verify authenticity of the data. The auxiliary information can be an auxiliary parameter related to the authenticity verification.

In an illustrated implementation, the verification information can be a hash value obtained by performing a hash calculation based on the original content of the product quality inspection report and the auxiliary information. The auxiliary information can include one of or a combination of at least two of the following: an identity of a data uploader, an upload timestamp, an upload location, etc.

In this case, the data storage format defined for the product quality inspection report can be shown in Table 1.

**Table 1**

| Number | Field name | Field content |
|---|---|---|
| 1 | Content field | Original content of data |
| 2 | Uploader identity field | Identity of an uploader |
| 3 | Upload time field | Upload timestamp of the data |
| 4 | Upload location field | Upload location of the data |
| 5 | Verification information field | A hash value calculated based on fields 1-4 |

The specific form of the content field entry is not specifically limited in the present specification. For example, it can be in the form of a picture.

The uploader identity field entry can be any form of information indicating the identity of the uploader, for example, an identity card number, fingerprint information, or a digital certificate signature.

The upload time field entry should be based on the generally accepted world time, so as to prevent ambiguity caused by inconsistency in understanding the same time between people in different time zones. For example, people in the Beijing time zone and people in the New York time zone may have inconsistent understanding of the same time.

The address description in the upload location field should not cause ambiguity. For example, there is "Zhongshan Road" in many cities. The most appropriate way is to use unambiguous address expression such as longitude and latitude coordinates, GeoHash, etc.

In the present specification, after receiving the product quality inspection report uploaded by the uploading client, the node device in the consortium blockchain can first verify the signature of the product quality inspection report based on the public key corresponding to the private key held by the product quality inspection organization. If the signature verification is passed, it indicates that the product quality inspection report is the information uploaded by the legitimate product quality inspection organization. In this case, the target data can be published in the blockchain, and the product quality inspection report can be stored in the distributed database of the blockchain after the consensus processing among the node devices in the consortium blockchain is complete.

The consensus algorithm used in the consortium blockchain is not specifically limited in the present specification. For example, mainstream consensus algorithms suitable for use in a consortium blockchain, such as PBFT, can be used, or a related consensus algorithm can be independently developed by the operator of the consortium blockchain.

When the product quality inspection report is successfully stored in the distributed database of the blockchain, the node device in the blockchain can return a data identifier indicating the storage location of the product quality inspection report in the blockchain to the product quality inspection organization through the uploading client.

For example, in an illustrated implementation, the data identifier can specifically be a transaction hash value of a transaction of the product quality inspection report.

In the present specification, the product quality inspection organization can also send the generated product quality inspection report and the data identifier returned by the node device in the consortium blockchain to the merchant. After receiving the product quality inspection report and the data identifier that are sent by the product quality inspection organization, the merchant can publish the product quality inspection report and the data identifier to a consumer through a website. For example, a picture of a product can be published to a consumer together with a picture of the product through an electronic merchant platform.

After viewing the product quality inspection report released by the merchant and the data identifier of the product quality inspection report in the blockchain, the consumer can verify authenticity of the product quality inspection report released by the merchant through the verification client.

In an illustrated implementation, after viewing the data identifier of the product quality inspection report in the blockchain that is published by the merchant, the consumer can manually enter the data identifier on the user interface provided by the verification client. The verification client can obtain the data identifier manually input by the user, and then initiate, based on the obtained data identifier, verification of the product quality inspection report.

In another illustrated implementation, when publishing the product quality inspection report, the merchant can add a graphic code (such as a two-dimensional code or a bar code) of the product quality inspection report to the released product quality inspection report.

For example, if the data identifier is a transaction hash value of a transaction of the product quality inspection report, the merchant can generate a corresponding graphic code by using a character string corresponding to the transaction hash value as coding information, and then attach the generated graphic code to the picture of the released product quality inspection report.

In this case, the consumer can scan and parse the graphic code by using the verification client to obtain the data identifier carried in the graphic code, and then initiate, based on the parsed data identifier, verification of the product quality inspection report.

In the present specification, after the verification client obtains the data identifier of the product quality inspection report in the consortium blockchain that is published by the merchant, it can be determined, based on the data identifier, whether the product quality inspection report has been stored in the distributed database of the consortium blockchain.

In an illustrated implementation, the data identifier is a transaction hash value of the transaction of the product quality inspection report, and Simplified Payment Verification (SPV) can be performed on the transaction based on the transaction hash value, to determine whether the transaction has been stored in the distributed database of the consortium blockchain.

SPV is a protocol used to verify whether a transaction already exists in the distributed database of the blockchain. The following describes in detail a process of performing SPV on the transaction based on the transaction hash.

In actual applications, a block in a blockchain generally includes two parts: a block header and a block body (including a transaction). A transaction recorded in a block is generally organized into a Merkle tree in the form of a transaction hash value.

The detailed process of organizing a hash value of a transaction recorded in a Merkle tree is not specifically limited in the present specification. A person skilled in the art can implement the technical solution in the present specification by referring to related technologies.

When SPV is performed on a transaction based on a transaction hash value, a Merkle verification path of the transaction including a target block of the transaction in a Merkle tree can be obtained first.

The Merkle verification path is specifically a path formed by sibling nodes (that is, neighboring nodes) that are obtained by traversing the Merkle tree based on the transaction value of a transaction. When SPV is performed on a transaction, the Merkle verification path of the transaction can be used as a calculation parameter for inversely calculating a hash value corresponding to the root node of the Merkle tree at which the transaction is located.

It is worthwhile to note that the Merkle verification path can be manually submitted by the user, or can be proactively queried from the blockchain by the verification client.

For example, when the verification client proactively queries the Merkle verification path of the transaction in the Merkle tree including the target block of the transaction, the verification client can first locate the target block in which the transaction is located based on the transaction hash value of the transaction.

A process of locating a block in which a transaction is located based on a transaction hash value is omitted in the present specification for simplicity. For example, in the related art, a Bloom filter can be deployed to locate a block in which a hash value of a transaction is located. After locating the block in which the transaction is located, the Merkle verification path of the transaction in the Merkle tree can be further found from the located Merkle tree of the block.

In the present specification, after obtaining the Merkle verification path of the transaction in the Merkle tree including the target block of the transaction, the hash value of the block header of the target block (that is, the hash value of the root node of the Merkle tree of the target block) can be calculated based on the calculation procedure specified by the SPV protocol. Then, it can be determined whether the calculated hash value of the block header of the target block matches the hash value stored in the block header of the target block. If the calculated hash value of the block header of the target block matches the hash value stored in the block header of the target block, it can be determined that the transaction is included in the target block; that is, the product quality inspection report has been successfully stored in the distributed database of the consortium blockchain. Alternatively, if the calculated hash value of the block header of the target block does not match the hash value stored in the block header of the target block, it indicates that the transaction is not included in the target block; that is, the product quality inspection report is not successfully stored in the distributed database stored in the consortium blockchain.

In the present specification, when it is determined, through the previously described implementation process, that the product quality inspection report has been stored in the distributed database of the consortium blockchain, the product quality inspection report can be further obtained from the storage location indicated by the data identifier.

For example, if the data identifier is still the transaction hash value of the transaction of the product quality inspection report, the corresponding transaction can be located based on the transaction hash value, and then the product quality inspection report recorded in the transaction can be read from the located transaction.

After the product quality inspection report is obtained from the storage location indicated by the data identifier, the verification information carried in the standard storage format of the product quality inspection report can be further read, and then authenticity of the product quality inspection report obtained from the distributed database of the consortium blockchain can be verified based on the verification information.

In the present specification, the authenticity verification is specifically to verify whether the original content recorded in the product quality inspection report is tampered with.

For example, in some scenarios, after a product quality inspection report is issued by a product quality inspection organization, the product quality inspection report can be organized into a standard data storage format and then sent to a merchant for uploading. In this case, some less reputable merchants can maliciously modify certain fields in the product quality inspection report before uploading the report.

For another example, in other scenarios, the product quality inspection report can be illegally intercepted during transmission, and certain fields in the report can be maliciously modified.

By introducing the process for verifying authenticity of the product quality inspection report in the blockchain, consumers can quickly identify malicious modifications of the product quality inspection report listed above.

In the present specification, when the verification client verifies authenticity of the product quality inspection report obtained from the distributed database of the consortium blockchain based on the verification information carried in the product quality inspection report, the verification client can specifically execute a locally installed verification program, or can implement the verification by remotely invoking a smart contract deployed in the consortium blockchain.

In an illustrated implementation, a verification program can be installed on the verification client to verify authenticity of the product quality inspection report.

For example, the authenticity verification rule of the product quality inspection report can be released by the product quality inspection organization serving as a data uploader, and the developer of the verification client can develop corresponding program execution code (for example, a function corresponding to the execution logic of the verification rule) in the software environment of the verification client based on the verification rule published by the product quality inspection organization.

When the verification client determines that the product quality inspection report has been stored in the distributed database of the consortium blockchain, and obtains the product quality inspection report stored in the consortium blockchain, the verification client can read the verification information from the obtained product quality inspection report. For example, when the data storage format shown in Table 1 is used, the verification client can read the verification information from field 5 shown in Table 1.

Further, the verification program installed locally can be executed to verify authenticity of the product quality inspection report obtained from the consortium blockchain based on the read verification information.

In an illustrated implementation, a smart contract can alternatively be pre-deployed in the consortium blockchain, and a verification procedure for verifying authenticity of the product quality inspection report is defined in the smart contract.

For example, an operator of a consortium blockchain can develop corresponding contract code based on an authenticity verification rule for the product quality inspection report released by a product quality inspection organization as a data uploader, deploy a smart contract, and then publish the smart contract in the consortium blockchain. Then, a node device in the consortium blockchain can perform consensus processing on the smart contract, and store the smart contract in a distributed database of the consortium blockchain after the consensus processing is complete, so that a client accessing the consortium blockchain can remotely invoke the smart contract.

When the verification client determines that the product quality inspection report has been stored in the distributed database of the consortium blockchain, and obtains the product quality inspection report stored in the consortium blockchain, the verification client can read the verification information from the obtained product quality inspection report, construct a transaction based on the verification information, submit the transaction to the smart contract, initiate revocation of the smart contract, execute a verification program defined in the smart contract, and verify authenticity of the product quality inspection report obtained from the consortium blockchain based on the read verification information.

In an illustrated implementation, for example, the verification information is a hash value obtained by performing a hash calculation based on the original content of the product quality inspection report and the auxiliary information carried in the data storage format of the product quality inspection report. In this case, the verification program installed locally on the verification client is executed; or the smart contract is invoked remotely, and the verification program defined in the smart contract is executed. When authenticity verification is performed on the product quality inspection report, the hash value can be obtained through re-calculation based on the original content of the product quality inspection report and the auxiliary information carried in the data storage format of the product quality inspection report obtained from the consortium blockchain.

Further, the calculated hash value can be matched with the hash value that is carried in the data storage format of the product quality inspection report as the verification information, to determine whether the calculated hash value is the same as the hash value that is carried in the data storage format of the product quality inspection report as the check information. If the two are the same, it indicates that the content carried in the product quality inspection report stored in the consortium blockchain is not tampered with, and the product quality inspection report passes the authenticity verification; of course, if the two are different, it indicates that the content carried in the product quality inspection report stored in the consortium blockchain has been tampered with, and the product quality inspection report does not pass the authenticity verification.

After the authenticity verification for the product quality inspection report is complete, the authenticity verification result can be output by the verification client to a consumer. Then, the consumer can determine whether to purchase the product by referring to the authenticity verification result output by the verification client for the product quality inspection report.

In the present specification, the product quality inspection report obtained from the consortium blockchain can also be output to a consumer through the verification client, so that the consumer can compare the stored product quality inspection report in the consortium blockchain with the product quality inspection report released by the merchant.

In this way, the consumer can visually check whether the information recorded in the product quality inspection report released by the merchant is consistent with the information recorded in the product quality inspection report uploaded by the product quality inspection organization.

In actual applications, the product quality inspection report can be output to the consumer immediately after being obtained from the consortium blockchain; or the product quality inspection report can be selectively outputted to a consumer after the authenticity verification for the product quality inspection report is complete and the authenticity verification result is output to the consumer by the verification client.

For example, when the authenticity verification result indicates that the product quality inspection report has passed the authenticity verification, the product quality inspection report obtained from the consortium blockchain can be output and displayed to the consumer. On the contrary, if the product quality inspection report does not pass the authenticity verification, the product quality inspection report is no longer output to the consumer. In this way, it is ensured that the consumer can only view the product quality inspection report that has passed the authenticity verification.

It is worthwhile to note that the product quality inspection report in the above implementation is only an example of the target data. Clearly, in actual applications, the target data can alternatively be data in other forms other than the product quality inspection report. When the target data is data in another form other than a product quality inspection report, a person skilled in the art can implement the technical solution described in the present specification by referring to the implementation process described in the implementations. Details are omitted in the present specification for simplicity.

According to the previously described technical solution, on one hand, it is determined, based on the data identifier published by the data provider, whether the target data has been stored in the blockchain, and authenticity of the information published by the data provider can be verified, so that the data verifier can quickly identify a false data identifier that is published by the data provider and that does not correspond to any data storage record in the blockchain.

For example, if it is determined, based on the data identifier published by the merchant, that no product quality inspection report corresponding to the data identifier is stored in the blockchain, it indicates that the data identifier published by the merchant may be a false data identifier, that is, the product quality inspection report released by the merchant may not exist.

On the other hand, after it is determined that the target data has been stored in the blockchain, authenticity verification is performed on the target data in the blockchain based on the verification information carried in the target data stored in the blockchain, so that the data verifier can determine whether the content of the target data in the blockchain has been tampered with, and quickly identify abnormal data.

For example, if the product quality inspection report stored in the blockchain does not pass the authenticity verification, it indicates that the product quality inspection report can be illegally tampered with before or when the report is uploaded, so that the consumer can quickly identify the abnormality.

Corresponding to the previously described method implementations, the present specification further provides an implementation of a blockchain-based data verification apparatus. The implementations of the blockchain-based data verification apparatus in the present specification can be applied to an electronic device. The apparatus implementations can be implemented by using software, hardware, or a combination of software and hardware. The software implementation is used as an example. As a logical apparatus, the apparatus is formed by reading the corresponding computer program instructions in the non-volatile memory by the processor of the electronic device into the memory for execution. In terms of hardware, FIG. 3 is a diagram illustrating a hardware structure of an electronic device in which a blockchain-based data verification apparatus is located. In addition to a processor, a memory, a network interface, and a non-volatile memory shown in FIG. 3, the electronic device can generally include other hardware based on other actual functions of the electronic device. Details are omitted here for simplicity.

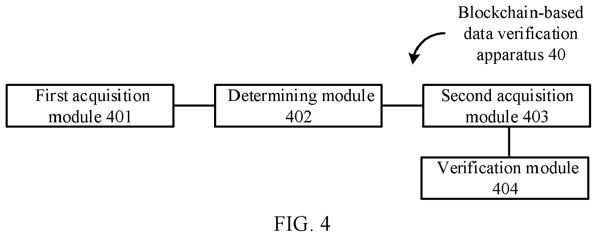

FIG. 4 is a logical block diagram illustrating a blockchain-based data verification apparatus, according to an example implementation of the present specification.

Referring to FIG. 4, the blockchain-based data verification apparatus 40 can be applied to the electronic device shown in FIG. 3, and includes a first acquisition module 401, a determining module 402, a second acquisition module 403, and a verification module 404.

The first acquisition module 401 is configured to obtain a data identifier of target data published by a data provider in a blockchain, where the data identifier indicates a storage location of the target data in the blockchain.

The determining module 402 is configured to determine whether the target data has been stored in the blockchain based on the data identifier.

The second acquisition module 403 is configured to: if the target data has been stored in the blockchain, obtain the target data from the storage location indicated by the data identifier, where the target data stored in the blockchain carries verification information used to verify authenticity of the target data.

The verification module 404 is configured to: verify authenticity of the obtained target data based on the verification information, and output a verification result to a data verifier.

In this implementation, the target data published by the data provider carries a graphic code generated based on the data identifier; and the first acquisition module 401 is configured to: scan and parse the graphic code to obtain the data identifier of the target data in the blockchain.

In this implementation, the data identifier is a transaction hash value of a transaction of the target data; and the determining module 402 is configured to: perform SPV for the transaction based on a transaction hash value of the transaction of the target data, to determine whether the transaction has been stored in the blockchain.

In this implementation, the verification module 404 is further configured to: execute an installed verification program to verify authenticity of the obtained target data based on the verification information; or invoke a smart contract published in the blockchain, execute a verification program defined in the smart contract, and verify authenticity of the obtained target data based on the verification information.

In this implementation, the target data stored in the blockchain further includes auxiliary information related to the authenticity verification; and the verification information is a hash value obtained by performing a hash calculation based on original content of the target data and the auxiliary information; and the verification module 404 is further configured to: perform a hash calculation on the original content of the target data and the auxiliary information to obtain a hash value; determine whether the calculated hash value is the same as a hash value carried in the target data stored in the blockchain; and if yes, determine that the obtained target data passed the authenticity verification, or if not, determine that the obtained target data has failed to pass the authenticity verification.

In this implementation, the auxiliary information includes any one of or a combination of at least two of the following: an identifier of a data uploader; an upload timestamp of the target data; or an upload location of the target data.

In this implementation, the second acquisition module 403 is further configured to: output the target data obtained from the storage location indicated by the data identifier to the data verifier, so that the data verifier compares the outputted target data with the target data published by the data provider.

For the detailed implementation process of the functions and purposes of the modules in the apparatus, references can be made to the implementation process of the corresponding steps in the method, and details are omitted here for simplicity.

Because the apparatus implementation basically corresponds to the method implementation, for the related parts, references can be made to the description of the method implementation. The previously described apparatus implementation is merely an example, where the units described as separate parts can or does not have to be physically separate, and components displayed as units can or cannot be physical units, and can be located in one place or can be distributed on a plurality of network units. Based on the practical needs, some or all of these modules can be selected to implement the purpose of the present specification. A person of ordinary skill in the art can understand and implement the blockchain-based data processing apparatus without creative efforts.

The system, apparatus, module, or unit illustrated in the previously described implementations can be implemented by using a computer chip or an entity, or can be implemented by using a product with a certain function. A typical implementation device is a computer in the form of a personal computer, a laptop computer, a cellular phone, a camera phone, a smart phone, a personal digital assistant, a media player, a navigation device, an e-mail transceiver, a game console, a tablet computer, a wearable device, or any combination of at least two of these devices.

Corresponding to the previously described method implementation, the present specification further provides an implementation of an electronic device. The electronic device includes a processor and a memory configured to store a machine executable instruction, where the processor and memory are usually connected to each other through an internal bus. In other possible implementations, the electronic device can also include an external interface used to communicate with other devices or components.

In this implementation, by reading and executing the machine executable instructions that are stored in the memory and that correspond to a control logic for blockchain-based data verification, the processor is enabled to: obtain a data identifier of target data published by a data provider in a blockchain, where the data identifier indicates a storage location of the target data in the blockchain; determine whether the target data has been stored in the blockchain based on the data identifier; if the target data has been stored in the blockchain, obtain the target data from the storage location indicated by the data identifier, where the target data stored in the blockchain carries verification information used to verify authenticity of the target data; and verify authenticity of the obtained target data based on the verification information, and output a verification result to a data verifier.

In this implementation, the target data published by the data provider carries a graphic code generated based on the data identifier; and by reading and executing the machine executable instructions that are stored in the memory and that correspond to a control logic for blockchain-based data verification, the processor is enabled to: scan and parse the graphic code to obtain the data identifier of the target data in the blockchain.

In this implementation, the data identifier is a transaction hash value of a transaction of the target data; and by reading and executing the machine executable instructions that are stored in the memory and that correspond to a control logic for blockchain-based data verification, the processor is enabled to: perform SPV for the transaction based on a transaction hash value of the transaction of the target data, to determine whether the transaction has been stored in the blockchain.

In this implementation, by reading and executing the machine executable instructions that are stored in the memory and that correspond to a control logic for blockchain-based data verification, the processor is enabled to: execute an installed verification program to verify authenticity of the obtained target data based on the verification information; or invoke a smart contract published in the blockchain, execute a verification program defined in the smart contract, and verify authenticity of the obtained target data based on the verification information.

In this implementation, the target data stored in the blockchain further includes auxiliary information related to the authenticity verification; and the verification information is a hash value obtained by performing a hash calculation based on original content of the target data and the auxiliary information; and by reading and executing the machine executable instructions that are stored in the memory and that correspond to a control logic for blockchain-based data verification, the processor is enabled to: perform a hash calculation on the original content of the target data and the auxiliary information to obtain a hash value; determine whether the calculated hash value is the same as a hash value carried in the target data stored in the blockchain; and if yes, determine that the obtained target data passed the authenticity verification, or if not, determine that the obtained target data has failed to pass the authenticity verification.

In this implementation, by reading and executing the machine executable instructions that are stored in the memory and that correspond to a control logic for blockchain-based data verification, the processor is enabled to: output the target data obtained from the storage location indicated by the data identifier to the data verifier, so that the data verifier compares the outputted target data with the target data published by the data provider.

A person skilled in the art can easily figure out other implementations of the present specification after considering and practicing the present specification disclosed here. The present specification is intended to cover any variations, usage, or adaptations of the present specification that follow the general principles of the present specification and include common general knowledge or commonly used technical means in the art that are not disclosed in the present specification. The present specification and implementations are merely examples. The protection scope and spirit of the present specification are indicated by the following claims.

It should be understood that the present specification is not limited to the precise structures described above and illustrated in the accompanying drawings, and various modifications and changes can be made without departing from the scope thereof. The protection scope of the present specification should be defined by the appended claims.

The above descriptions are merely preferred implementations of one or more implementations of the present specification, and are not intended to limit the present specification. Any modification, equivalent replacement, improvement, etc., made without departing from the principles of the present specification shall fall within the protection scope of the present specification.

## Claims

1. A blockchain-based data verification method, comprising:
obtaining (102) a data identifier of target data published by a data provider in a blockchain, wherein the data identifier indicates a storage location of the target data in the blockchain;
determining (104) whether the target data has been stored in the blockchain based on the data identifier;
in response to determining that no target data corresponding to the data identifier is stored in the blockchain, indicating that the data identifier published by the data provider is a false data identifier;
in response to determining that the target data has been stored in the blockchain, obtaining (106) the target data from the storage location indicated by the data identifier, wherein the target data stored in the blockchain comprises verification information used to verify authenticity of the target data and auxiliary information related to authenticity verification, wherein the verification information is a first hash value obtained by performing a hash calculation based on original content of the target data and the auxiliary information, wherein the auxiliary information comprises an identifier of a data uploader, an upload timestamp of the target data, and an upload location of the target data, wherein the upload location includes an address description;
executing an installed verification program to verify authenticity of the obtained target data based on the verification information;
performing a hash calculation on the original content of the target data and the auxiliary information to obtain a second hash value;
determining whether the second hash value is the same as the first hash value carried in the target data stored in the blockchain;
if yes, determining that the obtained target data passed the authenticity verification, or if not, determining that the obtained target data has failed to pass the authenticity verification; and
outputting a verification result to a data verifier.

2. The method according to claim 1, wherein the target data published by the data provider carries a graphic code generated based on the data identifier; and
obtaining (102) a data identifier of target data published by a data provider in a blockchain comprises:
scanning and parsing the graphic code to obtain the data identifier of the target data in the blockchain.

3. The method according to claim 1 or 2, wherein the data identifier is a transaction hash value of a transaction of the target data; and determining (104) whether the target data has been stored in the blockchain based on the data identifier comprises:
performing Simplified Payment Verification, SPV, for the transaction based on a transaction hash value of the transaction of the target data, to determine whether the transaction has been stored in the blockchain.

4. The method according to claim 1, further comprising:
outputting the target data obtained from the storage location indicated by the data identifier to the data verifier, so that the data verifier compares the outputted target data with the target data published by the data provider.

5. A blockchain-based data verification apparatus (40), comprising:
a first acquisition module (401), configured to obtain (102) a data identifier of target data published by a data provider in a blockchain, wherein the data identifier indicates a storage location of the target data in the blockchain;
a determining module (402), configured to determine (104) whether the target data has been stored in the blockchain based on the data identifier, and if it is determined that no target data corresponding to the data identifier is stored in the blockchain, indicate that the data identifier published by the data provider is a false data identifier;
a second acquisition module (403), configured to: if the target data has been stored in the blockchain, obtain (106) the target data from the storage location indicated by the data identifier, wherein the target data stored in the blockchain comprises verification information used to verify authenticity of the target data and auxiliary information related to authenticity verification,
wherein the verification information is a first hash value obtained by performing a hash calculation based on original content of the target data and the auxiliary information, wherein the auxiliary information comprises an identifier of a data uploader, an upload timestamp of the target data, and an upload location of the target data, wherein the upload location includes an address description; and
a verification module (404), configured to:
execute an installed verification program to verify authenticity of the obtained target data based on the verification information,
perform a hash calculation on the original content of the target data and the auxiliary information to obtain a second hash value,
determine whether the second hash value is the same as the first hash value carried in the target data stored in the blockchain,
if yes, determine that the obtained target data passed the authenticity verification, or if not, determine that the obtained target data has failed to pass the authenticity verification, and
output a verification result to a data verifier.

6. The apparatus (40) according to claim 5, wherein the target data published by the data provider carries a graphic code generated based on the data identifier; and
the first acquisition module (401) is configured to:
scan and parse the graphic code to obtain the data identifier of the target data in the blockchain.

7. The apparatus (40) according to claim 5 or 6, the data identifier is a transaction hash value of a transaction of the target data; and
the determining module (402) is configured to: perform Simplified Payment Verification, SPV, for the transaction based on a transaction hash value of the transaction of the target data, to determine whether the transaction has been stored in the blockchain.

8. The apparatus (40) according to claim 5, wherein the second acquisition module (403) is further configured to:
output the target data obtained from the storage location indicated by the data identifier to the data verifier, so that the data verifier compares the outputted target data with the target data published by the data provider.

## Patentansprüche

1. Blockchain-basiertes Datenverifizierungsverfahren, umfassend:
Erhalten (102) einer Datenkennung von Zieldaten, die von einem Datenanbieter in einer Blockchain veröffentlicht werden, wobei die Datenkennung einen Speicherort der Zieldaten in der Blockchain angibt;
Bestimmen (104), ob die Zieldaten in der Blockchain gespeichert wurden, basierend auf der Datenkennung;
als Reaktion auf das Bestimmen, dass keine Zieldaten, die der Datenkennung entsprechen, in der Blockchain gespeichert sind, Angeben, dass die vom Datenanbieter veröffentlichte Datenkennung eine falsche Datenkennung ist;
als Reaktion auf das Bestimmen, dass die Zieldaten in der Blockchain gespeichert wurden, Erhalten (106) der Zieldaten von dem Speicherort, der durch die Datenkennung angegeben wird, wobei die in der Blockchain gespeicherten Zieldaten Verifizierungsinformationen, die verwendet werden, um die Authentizität der Zieldaten zu verifizieren, und Hilfsinformationen in Bezug auf die Authentizitätsverifizierung umfassen, wobei die Verifizierungsinformationen ein erster Hash-Wert sind, der durch Durchführen einer Hash-Berechnung basierend auf dem ursprünglichen Inhalt der Zieldaten und den Hilfsinformationen erhalten wird, wobei die Hilfsinformationen eine Kennung eines Datenhochladers, einen Hochladezeitstempel der Zieldaten und einen Hochladeort der Zieldaten umfassen, wobei der Hochladeort eine Adressbeschreibung aufweist;
Ausführen eines installierten Verifizierungsprogramms, um die Authentizität der erhaltenen Zieldaten basierend auf den Verifizierungsinformationen zu verifizieren;
Durchführen einer Hash-Berechnung an dem ursprünglichen Inhalt der Zieldaten und den Hilfsinformationen, um einen zweiten Hash-Wert zu erhalten;
Bestimmen, ob der zweite Hash-Wert der gleiche ist wie der erste Hash-Wert, der in den in der Blockchain gespeicherten Zieldaten getragen wird;
wenn ja, Bestimmen, dass die erhaltenen Zieldaten die Authentizitätsverifizierung bestanden haben, oder wenn nicht, Bestimmen, dass die erhaltenen Zieldaten die Authentizitätsverifizierung nicht bestanden haben; und
Ausgeben eines Verifizierungsergebnisses an einen Datenverifizierer.

2. Verfahren nach Anspruch 1, wobei die vom Datenanbieter veröffentlichten Zieldaten einen Grafikcode tragen, der basierend auf der Datenkennung erzeugt wird; und
das Erhalten (102) einer Datenkennung von Zieldaten, die von einem Datenanbieter in einer Blockchain veröffentlicht werden, umfasst:
Scannen und Parsen des Grafikcodes, um die Datenkennung der Zieldaten in der Blockchain zu erhalten.

3. Verfahren nach Anspruch 1 oder 2, wobei die Datenkennung ein Transaktionshashwert einer Transaktion der Zieldaten ist; und
das Bestimmen (104), ob die Zieldaten in der Blockchain gespeichert wurden, basierend auf der Datenkennung, umfasst:
Durchführen einer vereinfachten Zahlungsverifizierung, SPV, für die Transaktion basierend auf einem Transaktionshashwert der Transaktion der Zieldaten, um zu bestimmen, ob die Transaktion in der Blockchain gespeichert wurde.

4. Verfahren nach Anspruch 1, ferner umfassend:
Ausgeben der Zieldaten, die von dem Speicherort erhalten werden, der durch die Datenkennung angegeben wird, an den Datenverifizierer, so dass der Datenverifizierer die ausgegebenen Zieldaten mit den vom Datenanbieter veröffentlichten Zieldaten vergleicht.

5. Blockchain-basierte Datenverifizierungsvorrichtung (40), umfassend:
ein erstes Erfassungsmodul (401), das eingerichtet ist, eine Datenkennung von Zieldaten, die von einem Datenanbieter in einer Blockchain veröffentlicht werden, zu erhalten (102), wobei die Datenkennung einen Speicherort der Zieldaten in der Blockchain angibt;
ein Bestimmungsmodul (402), das eingerichtet ist, zu bestimmen (104), ob die Zieldaten in der Blockchain gespeichert wurden, basierend auf der Datenkennung, und wenn bestimmt wird, dass keine Zieldaten, die der Datenkennung entsprechen, in der Blockchain gespeichert sind, anzugeben, dass die vom Datenanbieter veröffentlichte Datenkennung eine falsche Datenkennung ist;
ein zweites Erfassungsmodul (403), das eingerichtet ist: wenn die Zieldaten in der Blockchain gespeichert wurden, die Zieldaten von dem Speicherort, der durch die Datenkennung angegeben wird, zu erhalten (106), wobei die in der Blockchain gespeicherten Zieldaten Verifizierungsinformationen, die verwendet werden, um die Authentizität der Zieldaten zu verifizieren, und Hilfsinformationen in Bezug auf die Authentizitätsverifizierung umfassen, wobei die Verifizierungsinformationen ein erster Hash-Wert sind, der durch Durchführen einer Hash-Berechnung basierend auf dem ursprünglichen Inhalt der Zieldaten und den Hilfsinformationen erhalten wird, wobei die Hilfsinformationen eine Kennung eines Datenhochladers, einen Hochladezeitstempel der Zieldaten und einen Hochladeort der Zieldaten umfassen, wobei der Hochladeort eine Adressbeschreibung aufweist; und
ein Verifizierungsmodul (404), das eingerichtet ist:
ein installiertes Verifizierungsprogramm auszuführen, um die Authentizität der erhaltenen Zieldaten basierend auf den Verifizierungsinformationen zu verifizieren,
eine Hash-Berechnung an dem ursprünglichen Inhalt der Zieldaten und den Hilfsinformationen durchzuführen, um einen zweiten Hash-Wert zu erhalten, zu bestimmen, ob der zweite Hash-Wert der gleiche ist wie der erste Hash-Wert, der in den in der Blockchain gespeicherten Zieldaten getragen wird,
wenn ja, zu bestimmen, dass die erhaltenen Zieldaten die Authentizitätsverifizierung bestanden haben, oder wenn nicht, zu bestimmen,
dass die erhaltenen Zieldaten die Authentizitätsverifizierung nicht bestanden haben, und
ein Verifizierungsergebnis an einen Datenverifizierer auszugeben.

6. Vorrichtung (40) nach Anspruch 5, wobei die vom Datenanbieter veröffentlichten Zieldaten einen Grafikcode tragen, der basierend auf der Datenkennung erzeugt wird; und
das erste Erfassungsmodul (401) eingerichtet ist:
den Grafikcode zu scannen und zu parsen, um die Datenkennung der Zieldaten in der Blockchain zu erhalten.

7. Vorrichtung (40) nach Anspruch 5 oder 6, wobei die Datenkennung ein Transaktionshashwert einer Transaktion der Zieldaten ist; und
das Bestimmungsmodul (402) eingerichtet ist:
eine vereinfachte Zahlungsverifizierung, SPV, für die Transaktion basierend auf einem Transaktionshashwert der Transaktion der Zieldaten durchzuführen, um zu bestimmen, ob die Transaktion in der Blockchain gespeichert wurde.

8. Vorrichtung (40) nach Anspruch 5, wobei das zweite Erfassungsmodul (403) ferner eingerichtet ist:
die Zieldaten, die von dem Speicherort erhalten werden, der durch die Datenkennung angegeben wird, an den Datenverifizierer auszugeben, so dass der Datenverifizierer die ausgegebenen Zieldaten mit den vom Datenanbieter veröffentlichten Zieldaten vergleicht.

## Revendications

1. Procédé de vérification de données basé sur une chaîne de blocs, comprenant :
l'obtention (102) d'un identifiant de données de données cibles publiées par un fournisseur de données dans une chaîne de blocs, dans lequel l'identifiant de données indique un emplacement de stockage des données cibles dans la chaîne de blocs ;
la détermination (104) si les données cibles ont été stockées dans la chaîne de blocs sur la base de l'identifiant de données ;
en réponse à la détermination qu'aucune donnée cible correspondant à l'identifiant de données n'est stockée dans la chaîne de blocs, l'indication que l'identifiant de données publié par le fournisseur de données est un identifiant de fausse donnée ;
en réponse à la détermination que les données cibles ont été stockées dans la chaîne de blocs, l'obtention (106) des données cibles à partir de l'emplacement de stockage indiqué par l'identifiant de données, dans lequel les données cibles stockées dans la chaîne de blocs comprennent des informations de vérification utilisées pour vérifier l'authenticité des données cibles et des informations auxiliaires liées à la vérification d'authenticité, dans lequel les informations de vérification sont une première valeur de hachage obtenue en effectuant un calcul de hachage sur la base du contenu d'origine des données cibles et des informations auxiliaires, dans lequel les informations auxiliaires comprennent un identifiant d'un chargeur de données, une estampille temporelle de chargement des données cibles, et un emplacement de chargement des données cibles, dans lequel l'emplacement de chargement comprend une description d'adresse ;
l'exécution d'un programme de vérification installé pour vérifier l'authenticité des données cibles obtenues sur la base des informations de vérification ;
l'exécution d'un calcul de hachage sur le contenu d'origine des données cibles et des informations auxiliaires pour obtenir une seconde valeur de hachage ;
la détermination si la seconde valeur de hachage est la même que la première valeur de hachage transportée dans les données cibles stockées dans la chaîne de blocs ;
si oui, la détermination que les données cibles obtenues ont réussi la vérification d'authenticité, ou si non, la détermination que les données cibles obtenues n'ont pas réussi la vérification d'authenticité ; et
la délivrance d'un résultat de vérification à un vérificateur de données.

2. Procédé selon la revendication 1, dans lequel les données cibles publiées par le fournisseur de données transportent un code graphique généré sur la base de l'identifiant de données ; et
l'obtention (102) d'un identifiant de données de données cibles publiées par un fournisseur de données dans une chaîne de blocs comprend :
le balayage et l'analyse du code graphique pour obtenir l'identifiant de données des données cibles dans la chaîne de blocs.

3. Procédé selon la revendication 1 ou 2, dans lequel l'identifiant de données est une valeur de hachage de transaction d'une transaction des données cibles ; et la détermination (104) si les données cibles ont été stockées dans la chaîne de blocs sur la base de l'identifiant de données comprend :
l'exécution d'une vérification de paiement simplifiée, SPV, pour la transaction sur la base d'une valeur de hachage de transaction de la transaction des données cibles, pour déterminer si la transaction a été stockée dans la chaîne de blocs.

4. Procédé selon la revendication 1, comprenant en outre :
la délivrance des données cibles obtenues à partir de l'emplacement de stockage indiqué par l'identifiant de données au vérificateur de données, de sorte que le vérificateur de données compare les données cibles délivrées aux données cibles publiées par le fournisseur de données.

5. Appareil de vérification de données basé sur une chaîne de blocs (40), comprenant :
un premier module d'acquisition (401), configuré pour obtenir (102) un identifiant de données de données cibles publiées par un fournisseur de données dans une chaîne de blocs, dans lequel l'identifiant de données indique un emplacement de stockage des données cibles dans la chaîne de blocs ;
un module de détermination (402), configuré pour déterminer (104) si les données cibles ont été stockées dans la chaîne de blocs sur la base de l'identifiant de données, et s'il est déterminé qu'aucune donnée cible correspondant à l'identifiant de données n'est stockée dans la chaîne de blocs, indiquer que l'identifiant de données publié par le fournisseur de données est un identifiant de fausse donnée ;
un second module d'acquisition (403), configuré pour : si les données cibles ont été stockées dans la chaîne de blocs, obtenir (106) les données cibles à partir de l'emplacement de stockage indiqué par l'identifiant de données, dans lequel les données cibles stockées dans la chaîne de blocs comprennent des informations de vérification utilisées pour vérifier l'authenticité des données cibles et des informations auxiliaires liées à la vérification d'authenticité, dans lequel les informations de vérification sont une première valeur de hachage obtenue en effectuant un calcul de hachage sur la base du contenu d'origine des données cibles et des informations auxiliaires, dans lequel les informations auxiliaires comprennent un identifiant d'un chargeur de données, une estampille temporelle de chargement des données cibles, et un emplacement de chargement des données cibles, dans lequel l'emplacement de chargement comprend une description d'adresse ; et
un module de vérification (404), configuré pour :
exécuter un programme de vérification installé pour vérifier l'authenticité des données cibles obtenues sur la base des informations de vérification,
effectuer un calcul de hachage sur le contenu d'origine des données cibles et des informations auxiliaires pour obtenir une seconde valeur de hachage, déterminer si la seconde valeur de hachage est la même que la première valeur de hachage transportée dans les données cibles stockées dans la chaîne de blocs,
si oui, déterminer que les données cibles obtenues ont réussi la vérification d'authenticité, ou si non, déterminer que les données cibles obtenues n'ont pas réussi la vérification d'authenticité, et
délivrer un résultat de vérification à un vérificateur de données.

6. Appareil (40) selon la revendication 5, dans lequel les données cibles publiées par le fournisseur de données transportent un code graphique généré sur la base de l'identifiant de données ; et
le premier module d'acquisition (401) est configuré pour :
balayer et analyser le code graphique pour obtenir l'identifiant de données des données cibles dans la chaîne de blocs.

7. Appareil (40) selon la revendication 5 ou 6, dans lequel l'identifiant de données est une valeur de hachage de transaction d'une transaction des données cibles ; et
le module de détermination (402) est configuré pour :
effectuer une vérification de paiement simplifiée, SPV, pour la transaction sur la base d'une valeur de hachage de transaction de la transaction des données cibles, pour déterminer si la transaction a été stockée dans la chaîne de blocs.

8. Appareil (40) selon la revendication 5, dans lequel le second module d'acquisition (403) est en outre configuré pour :
délivrer les données cibles obtenues à partir de l'emplacement de stockage indiqué par l'identifiant de données au vérificateur de données, de sorte que le vérificateur de données compare les données cibles délivrées aux données cibles publiées par le fournisseur de données.
